# EUROPÄISCHE PATENTANMELDUNG

(11) **EP 3 508 968 A1**
(43) Veröffentlichungstag der Anmeldung: **10.07.2019**
(21) Anmeldenummer: 18214913.8
(22) Anmeldetag: 20.12.2018
(51) Int. Cl.: G06F 3/0488, B60K 35/00, B60K 37/06

(54) **VERFAHREN ZUM BETREIBEN EINER MENSCH-MASCHINEN-SCHNITTSTELLE SOWIE MENSCH-MASCHINEN-SCHNITTSTELLE**

(30) Priorität: 05.01.2018 DE 102018100197
(71) Anmelder: BCS Automotive Interface Solutions GmbH, 78315 Radolfzell (DE)
(72) Erfinder: ABT, David, 78315 Radolfzell (DE); LEMCKE, Sören, 78315 Radolfzell (DE); POMYTKIN, Nikolaj, 78315 Radolfzell (DE)
(74) Vertreter: Prinz & Partner mbB

(57) **Zusammenfassung**

Ein Verfahren zum Betreiben einer Mensch-Maschinen-Schnittstelle (30) für ein Fahrzeug mit einer Steuereinheit und wenigstens einer Bedienfläche (32), die als berührungsempfindliche Oberfläche ausgeführt ist, hat die folgenden Schritte:
a) eine Berührung an wenigstens einem beliebigen Berührungspunkt (46) der wenigstens einen Bedienfläche (32) wird erkannt,
b) die Anzahl an Berührungspunkten (46) auf der wenigstens einen Bedienfläche (32) wird erkannt,
c) eine Geste, die der wenigstens eine Berührungspunkt (46) absolviert, wird erkannt, und
d) eine Funktion wird in Abhängigkeit von der erkannten Geste und der erkannten Anzahl an Berührungspunkten (46) von der Steuereinheit ausgeführt.

Ferner ist eine Mensch-Maschinen-Schnittstelle (30) gezeigt.

## Beschreibung

Die Erfindung betrifft ein Verfahren zum Betreiben einer Mensch-Maschinen-Schnittstelle für ein Fahrzeug sowie eine Mensch-Maschinen-Schnittstelle für ein Fahrzeug.

Mensch-Maschinen-Schnittstellen für Fahrzeuge sind bekannt und weisen immer häufiger eine berührungsempfindliche Oberfläche auf. Die Bedienung von berührungsempfindlichen Oberflächen erfordert jedoch im Vergleich zur Bedienung von Knöpfen eine größere Aufmerksamkeit vom Benutzer, was zu einer Ablenkung des Benutzers führt, insbesondere vom Verkehrsgeschehen.

Aus diesem Grunde sind wichtige Funktionen oder Funktionen, die häufig verwendet werden, durch jeweils einen separaten Knopf einer Mensch-Maschinen-Schnittstelle im Fahrzeug erreichbar. Da für jede Funktion jedoch ein eigener Knopf vorgesehen sein muss, steigt der Platzbedarf.

Es ist daher Aufgabe der Erfindung, ein Verfahren zum Betreiben einer Mensch-Maschinen-Schnittstelle sowie eine Mensch-Maschinen-Schnittstelle bereitzustellen, die sowohl einen einfachen Zugriff auf eine Vielzahl an Funktionen ermöglichen als auch wenig Platz benötigen.

Die Aufgabe wird gelöst durch ein Verfahren zum Betreiben einer Mensch-Maschinen-Schnittstelle für ein Fahrzeug mit einer Steuereinheit und wenigstens einer Bedienfläche, die als berührungsempfindliche Oberfläche ausgeführt ist, mit den folgenden Schritten:
a) eine Berührung an wenigstens einem beliebigen Berührungspunkt der wenigstens einen Bedienfläche wird erkannt,
b) die Anzahl an Berührungspunkten auf der wenigstens einen Bedienfläche wird erkannt,
c) eine Geste, die der wenigstens eine Berührungspunkt absolviert, wird erkannt, und
d) eine Funktion wird in Abhängigkeit von der erkannten Geste und der erkannten Anzahl an Berührungspunkten von der Steuereinheit ausgeführt.

Auf diese Weise ist ein sehr einfacher und intuitiver Zugriff auf sehr viele verschiedene Funktionen möglich. Die verschiedenen Gesten sind einem Fahrzeuginsassen von gängigen Geräten, insbesondere Smartphones, bekannt. Die Menge an Funktionen, die durch die Durchführung einer Geste ausgeführt werden kann, wird durch die Erkennung der Anzahl an Berührungspunkten vervielfacht. Über die gleiche Bedienfläche können verschiedene Funktionen erreicht werden, sodass der Platzbedarf gering ist.

Die Funktion ist dabei eine Steuerfunktion für eine Fahrzeugkomponente, wie die Steuerung einer Medienausgabe, des Navigationssystems oder des Telefons. Zum Beispiel kann durch die Funktion die aktuelle Musikwiedergabe pausiert, die Lautstärke verändert oder die Navigation abgebrochen werden.

Vorzugsweise ermittelt die Steuereinheit, ob und wie viele des wenigstens einen Berührungspunktes einer Berührung mit einem Finger entspricht, wobei nur solche Berührungspunkte berücksichtigt werden, die einer Berührung mit einem Finger entsprechen. Dadurch werden unbeabsichtigte Berührungen der Bedienfläche, z.B. mit dem Handballen, ignoriert, wodurch die Bedienung der Mensch-Maschinen-Schnittstelle weiter vereinfacht wird. Eine Berührung mit einem Eingabestift oder ähnlichen Hilfsmitteln kann einer Berührung mit einem Finger gleichgesetzt werden.

Beispielsweise wird eine Berührung an mehreren beliebigen Berührungspunkten der wenigstens einen Bedienfläche erkannt, wobei die Geste mit allen der Berührungspunkte absolviert wird und wobei die absolvierte Geste berücksichtigt wird, wenn sie mit allen Berührungspunkten absolviert wurde. Insbesondere wird die Geste nur dann berücksichtigt, wenn sie mit allen Berührungspunkten absolviert wird. Auf diese Weise lassen sich Fehlbedienungen effektiv verhindern.

In einer Ausgestaltung der Erfindung ist die Steuereinheit dazu eingerichtet, verschiedene Gesten zu erkennen, wobei verschiedenen Gesten verschiedene Funktionen zugeordnet sind, wodurch die Anzahl an schnell erreichbaren Funktionen weiter vergrößert wird. Die verschiedenen Gesten, die die Steuereinheit erkennen kann, werden auch verfügbare Gesten genannt. Insbesondere ist jeder Geste eine andere Funktion zugeordnet.

Vorzugsweise stellen die Funktionen, die den verschiedenen Gesten zugeordnet werden, einen Funktionensatz dar, wobei der verwendete Funktionensatz in Abhängigkeit der erkannten Anzahl der Berührungspunkte auf der wenigstens einen Bedienfläche und/oder der erkannten Anzahl der Berührungspunkte, die zusammen die Geste absolvieren, ausgewählt wird. Dadurch kann die Bedienung der Mensch-Maschinen-Schnittstelle weiter vereinfacht werden.

Ein Funktionensatz enthält dabei mehrere Funktionen, insbesondere so viele Funktionen, wie die Anzahl an Gesten, die die Steuereinheit erkennen kann.

Die Funktionensätze können insbesondere verschiedenen Fahrzeugkomponenten zugeordnet sein, z. B. ist ein Funktionensatz zur Bedienung des Navigationssystems, ein anderer zur Bedienung des Telefons vorgesehen.

In einer Ausgestaltung der Erfindung wird erkannt, mit welchem Finger oder welchen Fingern die Bedienfläche bedient wird, wobei die Funktion und/oder der Funktionensatz in Abhängigkeit des verwendeten Fingers oder der verwendeten Finger ausgewählt wird, wodurch die Funktionen, die durch eine einzige Geste ausführbar sind, noch weiter vergrößert wird.

Beispielsweise wird die Hand erkannt, mit der die Bedienfläche bedient wird, wobei die Funktion und/oder der Funktionensatz in Abhängigkeit der verwendeten Hand ausgewählt wird. Auch auf diese Weise kann die Menge an schnell erreichbaren Funktionen vergrößert werden.

Außerdem kann unterschieden werden, ob die Bedienfläche mit der rechten oder der linken Hand verwendet wird, beispielsweise um zu ermitteln, ob der Fahrer oder der Beifahrer die Bedienfläche bedient.

Vorzugsweise wird eine Geste durch eine Bewegung des wenigstens einen Berührungspunktes in eine vorbestimmte Richtung absolviert und/oder eine Geste wird durch eine Bewegung des wenigstens einen Berührungspunktes in eine erste vorbestimmte Richtung und anschließend in eine zweite vorbestimmte Richtung absolviert, wodurch eine einfache, aber eindeutige Erkennung der Gesten möglich ist. Zum Beispiel sind die erste und zweite vorbestimmte Richtung gegenläufig oder senkrecht zueinander.

In einer Ausführungsform ist die vorbestimmte Richtung relativ zur Bedienfläche vorbestimmt.

Alternativ oder zusätzlich ermittelt die Steuereinheit die Lage der Hand eines Benutzers anhand der Position der Berührungspunkte zueinander, wobei die vorbestimmte Richtung relativ zur Lage der Hand vorbestimmt ist.

Um eine große Anzahl an Gesten bereitstellen zu können, kann eine Geste dadurch absolviert werden, dass der Berührungspunkt bzw. der den Berührungspunkt erzeugende Finger kurzzeitig entfernt und an der im Wesentlichen selben Stelle wieder aufgesetzt wird.

Zum Beispiel sind weitere Gesten durch mehrmaliges Entfernen und Aufsetzten denkbar. Auch können sich verschiedene Gesten durch bis zum erneuten Aufsetzen verstrichene Zeit unterscheiden.

In einer weiteren Ausführungsform der Erfindung wird die Funktion und/oder der Funktionensatz auf einem Ausgabebildschirm räumlich getrennt von der Bedienfläche dargestellt, um den Benutzer möglichst wenig abzulenken.

Die Ausgabe kann zum Beispiel zusammen mit den verfügbaren Gesten erfolgen, sobald eine Berührung an wenigstens einem beliebigen Berührungspunkt der wenigstens einen Bedienfläche erkannt wurde und/oder sobald die Anzahl an Berührungspunkten, die die wenigstens eine Bedienfläche berühren, erkannt wurde.

Ferner wird die Aufgabe gelöst durch eine Mensch-Maschinen-Schnittstelle für ein Fahrzeug mit wenigstens einer Bedienfläche, die als berührungsempfindliche Oberfläche ausgeführt ist, und einer Steuereinheit, die dazu eingerichtet ist, das erfindungsgemäße Verfahren durchzuführen, wobei die wenigstens eine Bedienfläche mit der Steuereinheit zur Datenübertragung verbunden ist.

Vorzugsweise weist die Mensch-Maschinen-Schnittstelle einen Ausgabebildschirm auf, der räumlich getrennt von der Bedienfläche und/oder einem Fahrzeugbauteil, an dem die Bedienfläche vorgesehen ist, angeordnet ist, wobei die Funktion, die in Abhängigkeit von der erkannten Geste und der erkannten Anzahl an Berührungspunkten von der Steuereinheit ausgeführt wird, die verfügbaren Gesten und/oder der Funktionssatz auf dem Ausgabebildschirm dargestellt ist. Dadurch wird die Bedienung der Mensch-Maschinen-Schnittstelle weiter vereinfacht.

In einer Ausgestaltung weist die Mensch-Maschinen-Schnittstelle wenigstens ein Fahrzeugbauteil auf, wobei die Bedienfläche an dem wenigstens einen Fahrzeugbauteil angeordnet ist, insbesondere wobei mehrere Fahrzeugbauteile vorgesehen sind, wobei mehrere Bedienflächen an verschiedenen Fahrzeugbauteilen angeordnet sind. Dadurch ist die Bedienfläche für den Benutzer immer einfach zu erreichen.

Die mehreren Bedienflächen können an verschiedenen Seiten eines Sitzes, insbesondere des Fahrersitzes vorgesehen sein.

Vorzugsweise haben die mehreren Bedienflächen die gleiche Funktionalität.

Zum Beispiel erstreckt sich die Bedienfläche über wenigstens 50 %, insbesondere wenigstens 75 % der Oberfläche des jeweiligen Fahrzeugbauteils.

Die Bedienfläche kann unter einer Zieroberfläche des Fahrzeugbauteils angeordnet sein, wodurch die Zieroberfläche zu einer berührungsempfindlichen Oberfläche wird.

Alternativ oder zusätzlich kann die Bedienfläche und/oder das Fahrzeugbauteil ein mechanisches Rückkopplungselement zur haptischen Rückkopplung aufweisen, insbesondere einen Vibrationsmotor, einen Druckwiderstand und/oder eine Ultraschallquelle.

Beispielsweise ist das Fahrzeugbauteil ein Lenkrad, ein Sitz, ein Steuerknüppel, eine Türblende, eine Armlehne, ein Teil einer Mittelkonsole, ein Teil eines Armaturenbretts und/oder ein Teil einer Überkopfverkleidung, um eine einfache Betätigung des Bedienfeldes zu ermöglichen.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1a) eine perspektivische Ansicht eines Cockpits eines Fahrzeugs, das mit einer erfindungsgemäßen Mensch-Maschinen-Schnittstelle versehen ist,
- Figur 1b) eine schematische Schnittansicht eines Teils des Cockpits gemäß Figur 1a) im Bereich einer Bedienfläche der Mensch-Maschinen-Schnittstelle,
- die Figuren 2a) bis 2c), 3a) bis 3c) sowie 4a) bis 4c) Veranschaulichungen des erfindungsgemäßen Verfahrens.

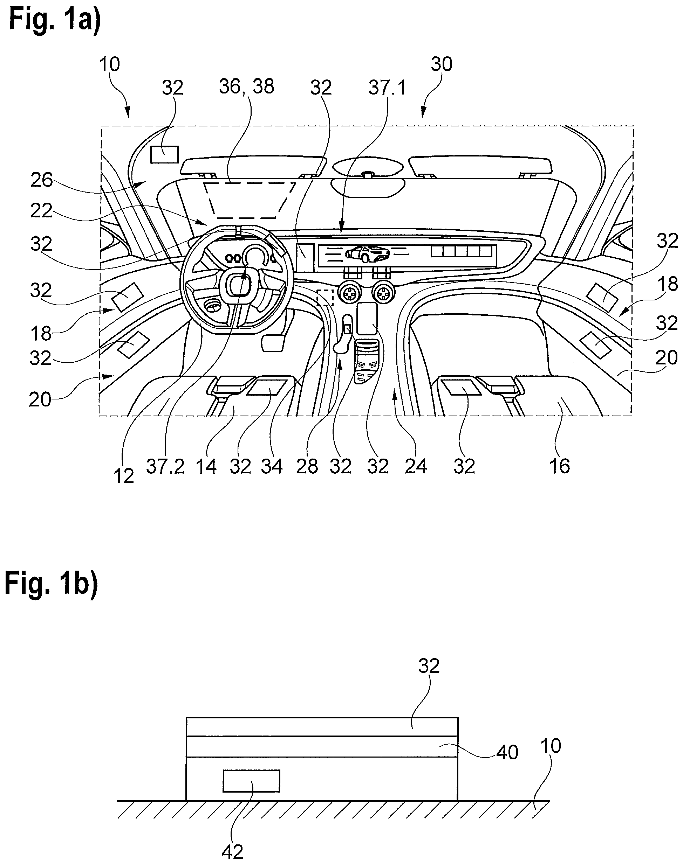

In Figur 1a) ist ein Cockpit eines Fahrzeugs dargestellt.

Das Cockpit weist in üblicher Weise verschiedene Fahrzeugbauteile 10 auf, wie ein Lenkrad 12, einen Fahrersitz 14, einen Beifahrersitz 16, Türblenden 18, Armlehnen 20, ein Armaturenbrett 22, eine Mittelkonsole 24 und Überkopfverkleidungen 26.

Außerdem kann ein Steuerknüppel 28 im Cockpit vorgesehen sein.

Zudem weist das Cockpit eine Mensch-Maschinen-Schnittstelle 30 auf, die im gezeigten Ausführungsbeispiel mehrere Bedienflächen 32, die als berührungsempfindliche Oberflächen ausgeführt sind, wenigstens eine Steuereinheit 34 und mehrere Ausgabebildschirme 36 umfasst.

Die Steuereinheit 34 ist mit den Ausgabebildschirmen 36 und den Bedienflächen 32 zur Datenübertragung verbunden. Dies kann über ein Kabel oder kabellos geschehen.

Als Ausgabebildschirme 36 sind in Figur 1a) zwei Bildschirme 37.1, 37.2 im Armaturenbrett 22 vorgesehen, und ein Bildschirm eines Head-up-Displays 38 (HUD) dient ebenfalls als Ausgabebildschirm 36.

Im gezeigten Ausführungsbeispiel weist die Mensch-Maschinen-Schnittstelle 30 elf Bedienflächen 32 an verschiedenen der Fahrzeugbauteile 10 auf. Die Fahrzeugbauteile 10, an denen die Bedienflächen 32 vorgesehen sind, sind dann Teil der Mensch-Maschinen-Schnittstelle 30.

Die Anzahl an Bedienflächen 32 ist jedoch nur beispielhaft zu verstehen. Die Mensch-Maschinen-Schnittstelle 30 kann ebenso nur mit einer Bedienfläche 32 an einem der Fahrzeugbauteile 10 oder einer beliebigen anderen Anzahl an Bedienflächen 32 ausgeführt sein.

In der gezeigten Ausführungsform befinden sich Bedienflächen 32 an je einer der Türblenden 18 der Fahrertür bzw. der Beifahrertür oder an dazugehörigen Armlehnen 20.

Ebenfalls ist eine Bedienfläche 32 an der Überkopfverkleidung 26 im Fahrerbereich angeordnet.

Eine weitere Bedienfläche 32 ist am Lenkrad 12 vorgesehen, wobei in Figur 1a) die Bedienfläche 32 auf der Vorderseite des Lenkrads 12 dargestellt ist. Möglich und vorteilhaft ist es auch, wenn sich die Bedienfläche 32 auf die Rückseite des Lenkrads 12 erstreckt oder nur dort ausgebildet ist.

Weiterhin ist eine Bedienfläche 32 im Armaturenbrett 22 und eine in der Mittelkonsole 24 vorgesehen.

Auch befinden sich Bedienflächen 32 am Fahrersitz 14 und am Beifahrersitz 16 und dienen insbesondere zur Sitzverstellung. Zur Veranschaulichung sind diese Bedienflächen auf den Oberseiten der Sitze 14, 16 dargestellt. Jedoch können sich diese auch auf den Seiten der Sitze 14, 16 an den bekannten Positionen für Verstellvorrichtungen für die Sitze befinden.

Am Steuerknüppel 28 ist auch wenigstens eine Bedienfläche 32 vorgesehen. Beispielsweise ist die Bedienfläche 32 am Steuerknüppel 28 in verschiedene Bereiche aufgeteilt, die an den Stellen am Steuerknüppel 28 vorgesehen sind, an denen die Fingerspitzen eines Benutzers anliegen.

Zur Veranschaulichung sind die beschriebenen Bedienflächen 32 jeweils räumlich stark begrenzt dargestellt. Selbstverständlich können die Bedienflächen 32 auch wesentlich größer sein und beispielsweise wenigstens 50 %, insbesondere wenigstens 75 % der Oberfläche des jeweiligen Fahrzeugbauteils 10 einnehmen. Dabei wird nur die dem Innenraum zugewandte Oberfläche des jeweiligen Fahrzeugbauteils 10 berücksichtigt.

Beispielsweise kann die Bedienfläche 32 ober- oder unterhalb einer Zieroberfläche des jeweiligen Fahrzeugbauteils 10 vorgesehen sein, sodass große Bedienflächen 32 in optisch ansprechender Weise realisiert werden können. Die Bedienfläche 32 kann eine berührungsempfindliche Folie umfassen.

Selbstverständlich kann wenigstens eine der Bedienflächen 32 zusammen mit einem der Ausgabebildschirme 36 als Touch-Display ausgeführt sein.

In Figur 1b) ist beispielhaft eine Bedienfläche 32 an einem Fahrzeugbauteil 10 im Schnitt dargestellt.

In dem gezeigten Ausführungsbeispiel ist die Bedienfläche 32 nicht direkt am Fahrzeugbauteil 10 befestigt, sondern unterhalb der Bedienfläche ist ein optisches Element 40, in diesem Falle ein weiterer Bildschirm, vorgesehen. Das optische Element 40 kann jedoch auch eine LED-Matrix oder einzelne LEDs sein.

Der Bildschirm und die Bedienfläche 32 bilden zusammen ein berührungsempfindliches Touch-Display, wie es beispielsweise von Smartphones oder Tablets bekannt ist. Denkbar ist selbstverständlich auch, dass die Reihenfolge von Bedienfläche 32 und optischem Element 40 vertauscht ist und/oder zusätzlich noch eine Schutzschicht auf der Außenseite vorgesehen ist.

Außerdem ist zwischen der Bedienfläche 32 und dem Fahrzeugbauteil 10 ein mechanisches Rückkopplungselement 42 vorgesehen. In der gezeigten Ausführungsform handelt es sich dabei um einen Vibrationsmotor, der die Bedienfläche 32 in Vibration versetzen kann.

Denkbar ist, dass das mechanische Rückkopplungselement 42 ein Druckwiderstand ist, wie er aus Drucktasten (z. B. bei einer Tastatur) bekannt ist. Der Druckwiderstand kann einen bestimmten Druckpunkt durch eine mechanische Gegenkraft erzeugen, um eine haptische Rückkopplung beim Drücken der Bedienfläche 32 zu geben.

Denkbar ist jedoch auch, dass es sich bei dem mechanischen Rückkopplungselement 42 um eine Ultraschallquelle handelt, die Ultraschallwellen in Richtung des Fingers eines Benutzers emittiert, um eine haptische Rückkopplung beim Betätigen der Bedienfläche 32 zu geben.

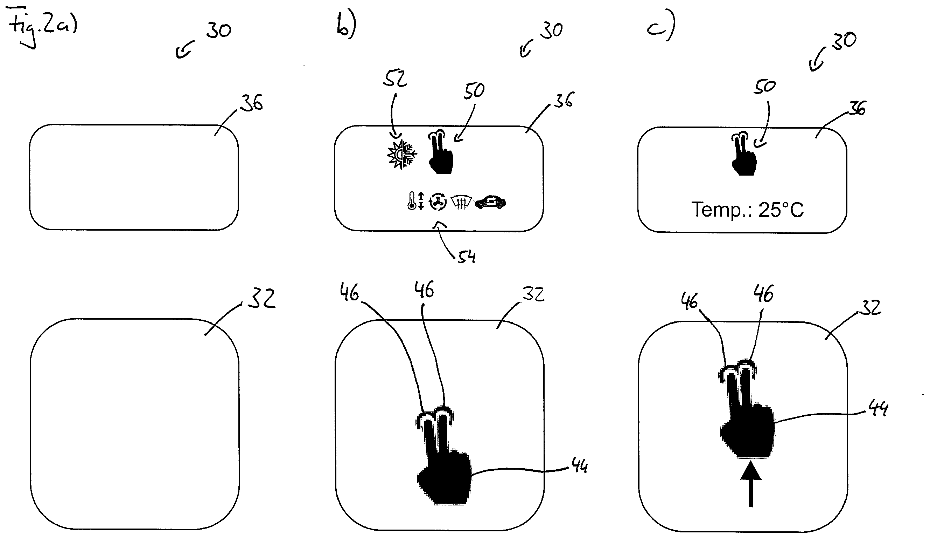

In den Figuren 2a) bis 2c), 3a) bis 3c) und 4a) bis 4c) sind zur Erläuterung des Verfahrens zum Betreiben der Mensch-Maschinen-Schnittstelle 30 schematisch eine der Bedienflächen 32 (unten) sowie ein Teil der Anzeige eines Ausgabebildschirms 36 (oben) dargestellt.

In der in den Figur 2a) bis 2c) gezeigten Situation wird zu Beginn die Bedienfläche 32 nicht berührt, und auch im Ausgabebildschirm 36 werden keine Informationen ausgegeben (Fig. 2a).

Legt nun ein Benutzer zwei Finger seiner Hand 44, wie in Figur 2b) dargestellt, auf die Bedienfläche 32, berührt er die Bedienfläche 32 mit den beiden Fingern gleichzeitig, wodurch zwei verschiedene Berührungspunkte 46 erzeugt werden.

Der Benutzer kann seine Hand an jede beliebige Stelle auf der Bedienfläche 32 legen bzw. seine Finger können an jeder beliebigen Stelle die Bedienfläche 32 berühren, ohne dass das Verfahren dadurch gestört würde.

Die Berührung der Finger an der Bedienfläche 32 bzw. die Berührungspunkte 46 werden von der Steuereinheit 34 erkannt, wobei die Steuereinheit 34 auch die Anzahl an Berührungspunkten 46 ermittelt.

Dabei berücksichtigt die Steuereinheit 34 nur solche Berührungen bzw. Berührungspunkte 46, die durch die Berührung mit einem Finger hervorgerufen werden. Die Erkennung, ob ein Berührungspunkt 46 von einem Finger erzeugt wurde oder nicht, kann beispielsweise durch eine Analyse der Lage der Berührungspunkte 46 zueinander erfolgen, da die Lage der Berührungspunkte 46 zueinander durch die menschliche Anatomie vorgegeben ist.

Auch die Größe des Berührungspunktes 46 kann ausschlaggebend sein. Auf diese Weise lässt sich beispielsweise die Berührung der Bedienfläche 32 durch den Handballen der Hand 44 erkennen und ignorieren.

Dadurch kann die Steuereinheit 34 auch erkennen, mit welchem Finger die Berührungspunkte 46 erzeugt wurden.

Auch ist es denkbar, dass die Steuereinheit 34 erkennt, ob die Bedienfläche 32 mit einer linken oder einer rechten Hand bedient wird.

Hat die Steuereinheit 34 die Anzahl der Berührungspunkte 46 - hier also zwei Berührungspunkte 46 - erkannt, wählt sie einen der Anzahl der Berührungspunkte 46 zugeordneten Funktionensatz aus, der beispielsweise in einem Speicher der Steuereinheit 34 hinterlegt ist.

Ein Funktionensatz umfasst mehrere Funktionen, denen jeweils eine Geste zugeordnet ist, mittels der die entsprechende Funktion ausgeführt werden kann.

Im Rahmen der Erfindung besteht eine Geste aus einer Bewegung der Berührungspunkte 46 in eine vorbestimmte Richtung relativ zur Bedienfläche 32 oder zur Ausrichtung der Hand 44 des Benutzers. Auch kann eine Geste komplexe Bewegungen mit Richtungswechseln enthalten, wie Zickzackbewegungen, kreisende Bewegungen oder dergleichen.

Unter eine Geste fallen im Rahmen dieser Erfindung jedoch auch solche Bewegungen, bei denen einer der Berührungspunkte 46 für eine bestimmte Dauer nicht vorhanden ist, beispielsweise weil der entsprechende Finger für diese Dauer von der Bedienfläche 32 abgehoben und anschließend an im Wesentlichen derselben Stelle, von der er entfernt wurde, wieder aufgesetzt wurde.

Die Häufigkeit, mit der ein bestimmter Berührungspunkt 46 entfernt wird und durch erneutes Aufsetzen wieder auftritt oder die Zeit bis zum erneuten Aufsetzen des Fingers auf der Bedienfläche 32 kann Teil der Geste sein und damit zur Unterscheidung verschiedener Gesten herangezogen werden.

Beispielsweise können folgende Gesten unterschieden werden: Tippen ("Tap"), Doppel-Tippen ("Double-Tap"), Tippen-und-Halten ("Tap-and-Hold"), Ziehen ("Drag"), Wischen ("Swipe"), Kreisbewegung ("Circle") und Hin-und-Her ("Shuffle").

Beim Tippen wird der wenigstens eine entsprechende Finger von der Bedienfläche 32 entfernt und tippt danach kurz wieder auf die Bedienfläche 32. Beim Doppel-Tippen wird mit dem Finger zweimal kurz hintereinander auf die Bedienfläche 32 getippt. Dadurch entsteht für kurze Zeit wieder der wenigstens eine Berührungspunkt 46, der von der Steuereinheit 36 erkannt werden kann.

Beim Tippen-und-Halten wird der Finger nach dem Tippen auf der Bedienfläche 32 belassen, wobei die Geste dann als vollständig absolviert erkannt wird, wenn der Finger für eine vorbestimmte Zeit nach dem Tippen auf der Bedienfläche 32 gehalten wird.

Beim Ziehen wird der wenigstens eine Finger und damit der wenigstens eine entsprechende Berührungspunkt 46 über die Bedienfläche 32 bewegt und nach der Bewegung in Kontakt mit der Bedienfläche 32 gehalten.

Das Wischen ist dem Ziehen ähnlich, wobei der Finger am Ende der Bewegung von der Bedienfläche 32 abgehoben wird.

Bei der Geste "Kreisbewegung" wird der wenigstens eine Finger und damit der wenigstens eine entsprechende Berührungspunkt 46 im Kreis über die Bedienfläche bewegt. Dabei kann die Geste bereits dann erkannt werden, wenn ein bestimmter Abschnitt vom Kreis abgefahren wurde, beispielsweise ein Halbkreis. Kreisbewegungen im und gegen den Uhrzeigersinn können unterschiedliche Gesten sein.

Bei der Geste "Hin-und-Her" wird der wenigstens eine Finger und damit der wenigstens eine entsprechende Berührungspunkt 46 in eine erste vorbestimmte Richtung und anschließend in eine zweite vorbestimmte Richtung, die insbesondere zur ersten Richtung entgegengesetzt ist, bewegt.

Die angeführten Gesten sind selbstverständlich nur beispielhaft. Denkbar sind noch weitere Gesten mit komplexeren Bewegungsabläufen, zum Beispiel in Form eines "L".

Die vorbestimmten Richtungen sind in Bezug auf die Ausrichtung der Bedienfläche 32 definiert oder in Bezug zur Ausrichtung der Hand 44 des Benutzers. Die Ausrichtung der Hand 44 des Benutzers kann von der Steuereinheit 34 erkannt werden.

Die Funktionen innerhalb eines Funktionensatzes sind vorzugsweise thematisch ähnlich oder betreffen die gleiche Komponente des Fahrzeugs.

Zum Beispiel stellen die Funktionen "Zieltemperatur erhöhen", "Zieltemperatur verringern", "Lüftergeschwindigkeit erhöhen", "Lüftergeschwindigkeit verringern", "Fensterheizung" und "Umluftbetrieb" Funktionen des Funktionensatzes "Klimaanlage" dar, der zur Steuerung der Klimaanlage verwendet wird.

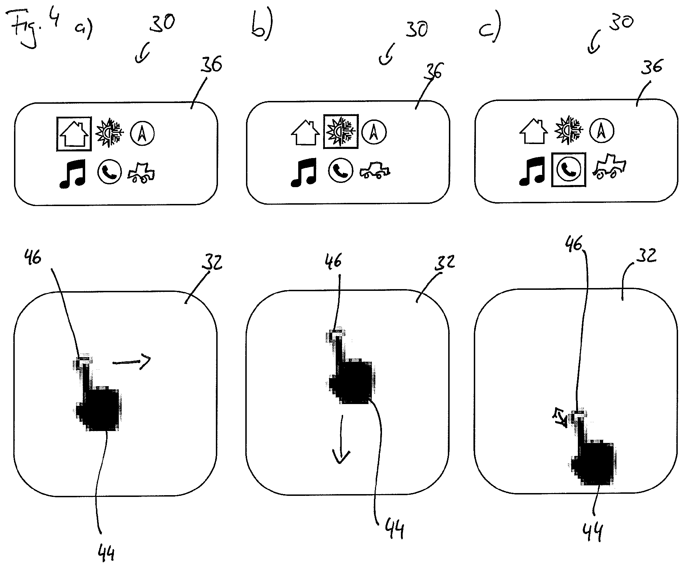

Andere Funktionssätze sind beispielsweise "Navigation", "Entertainment", "Telefon" und "Autoeinstellungen" (vgl. Figur 4).

Im gezeigten Ausführungsbeispiel ist eine Berührung der Bedienfläche 32 an zwei Berührungspunkten 46 dem Funktionensatz "Klimaanlage" zugeordnet, der von der Steuereinheit 34 entsprechend ausgewählt wird.

Die Steuereinheit 34 stellt dann auf dem Ausgabebildschirm 36 sowohl die Anzahl an erkannten Berührungspunkten 46, hierdurch ein entsprechendes Hand-Icon 50 und den ausgewählten Funktionensatz, hier über ein entsprechendes Symbol 52, dar.

Außerdem werden von der Steuereinheit 34 die Funktionen durch Funktionssymbole 54 dargestellt, die im gewählten Funktionensatz "Klimaanlage" vorhanden sind. Diese Funktionen kann der Benutzer durch Gesten mit zwei Fingern, das heißt Gesten mit zwei Berührungspunkten 46 ausführen bzw. erreichen.

Im gezeigten Ausführungsbeispiel möchte der Benutzer die Zieltemperatur der Klimaanlage erhöhen. Dieser Funktion "Zieltemperatur erhöhen" ist die Geste "Ziehen nach oben" zugeordnet. Zur Vereinfachung sind die Richtungsangaben in dieser Beschreibung auf die Zeichenebene bezogen.

Der Benutzer führt also die entsprechende Geste aus, wie in Figur 2c) veranschaulicht ist.

In der in Figur 2 gezeigten Situation fährt der Benutzer mit seinen beiden Fingern nach oben, sodass die beiden Berührungspunkte 46 ebenfalls eine Bewegung nach oben, relativ zur Hand des Benutzers, absolvieren.

Die Steuereinheit 34 registriert die Bewegung und die Trajektorie der Berührungspunkte 46 und bestimmt auf diese Weise die Geste, die ausgeführt wurde. Im diesen Fall erkennt die Steuereinheit 34 also die Geste "Ziehen nach oben", bei dem die Berührungspunkte 46 eine im Wesentlichen gerade Linie in die vorbestimmte Richtung (oben) bewegt wurden.

Eine Geste wird von der Steuereinheit 34 nur dann berücksichtigt, wenn sie mit allen zuvor erkannten Berührungspunkten 46 vollständig ausgeführt wurde. Nur in diesem Fall wird die entsprechende zugeordnete Funktion von der Steuereinheit 34 ausgeführt.

Dieser Geste ist die Funktion "Zieltemperatur erhöhen" zugeordnet, sodass die Steuereinheit 34 die Zieltemperatur der Klimaanlage erhöht.

Gleichzeitig zeigt die Steuereinheit 34 dem Ausgabebildschirm 36 die aktuell ausgewählte Zieltemperatur an und verändert diese bei der Ausführung der Geste.

Die Größe der Veränderung der Zieltemperatur kann beispielsweise anhand des zurückgelegten Weges der Berührungspunkte 46 ermittelt werden. Alternativ oder zusätzlich kann die Größe durch die Geschwindigkeit oder die Beschleunigung der Berührungspunkte 46 während der Ausführung der Geste ermittelt werden.

Ist die gewünschte Zieltemperatur eingestellt, entfernt der Benutzer seine Hand von der Bedienfläche 32 und die Berührungspunkte 46 gehen dadurch verloren.

Die Interaktion mit der Mensch-Maschinen-Schnittstelle 30 ist dann zu Ende und die Steuereinheit 34 speichert spätestens jetzt die Eingaben des Benutzers oder übergibt sie an die entsprechenden Fahrzeugkomponenten.

Denkbar ist jedoch auch, dass der Benutzer gleich im Anschluss eine weitere Geste ausführt, beispielsweise indem er seine Finger nach unten bewegt. Dieser Geste, nämlich "Ziehen nach unten" ist eine Verringerung der Zieltemperatur der Klimaanlage als Funktion zugeordnet. Die Steuereinheit 34 passt in Abhängigkeit der Bewegung die Zieltemperatur an und gibt den Wert über den Ausgabebildschirm 36 aus.

Für den Benutzer entsteht somit die Illusion, dass er mit den beiden Fingern einen Schieberegler für die Zieltemperatur bewegen würde.

Andere Funktionen, wie "Lüftergeschwindigkeit erhöhen" und "Lüftergeschwindigkeit verringern", sind beispielsweise einer Bewegung in Querrichtung zur Hand 44 zugeordnet, also der Geste "Ziehen nach rechts" bzw. "Ziehen nach links".

Denkbar ist auch, dass mit den Gesten "Kreisbewegung im Uhrzeigersinn" und "Kreisbewegung gegen den Uhrzeigersinn" die Funktionen "Fensterheizung" bzw. "Umluftbetrieb" erreicht werden.

Der Benutzer kann somit durch eine einzelne Geste ganz gezielt eine bestimmte Funktion ausführen.

Die Funktion bzw. der Funktionensatz wurde im gezeigten Ausführungsbeispiel anhand der Anzahl der Berührungspunkte 46, das heißt der Anzahl an verwendeten Finger ausgewählt. Alternativ oder zusätzlich kann die Funktion bzw. der Funktionensatz von der Steuereinheit 34 in Abhängigkeit davon ausgewählt werden, welcher Finger verwendet wird.

Selbstverständlich kann die Steuereinheit 34 auch die Funktionen bzw. den Funktionensatz in Abhängigkeit davon auswählen, ob die Bedienfläche 32 mit einer linken oder einer rechten Hand bedient werden, um unterschiedliche Funktionen für den Fahrer oder den Beifahrer bereitstellen zu können.

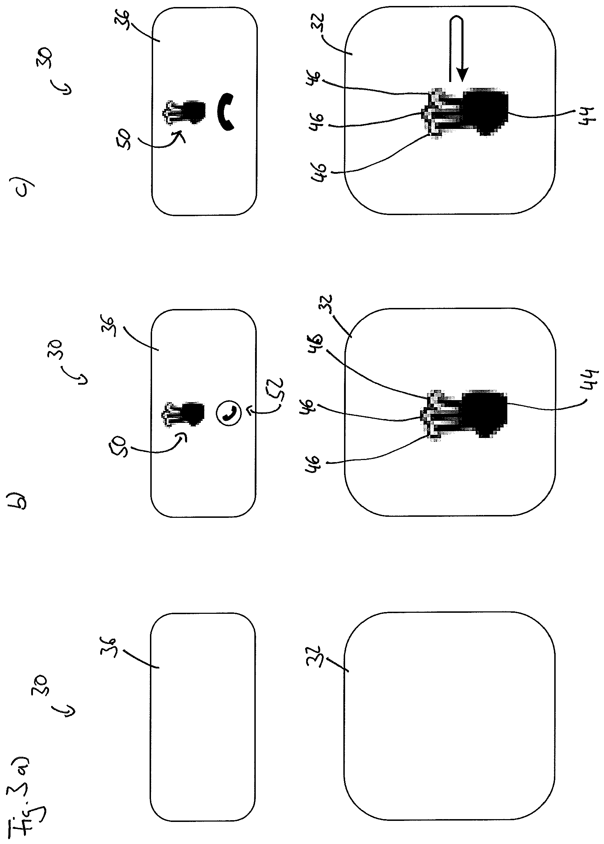

In der in den Figur 3a) bis 3c) gezeigten Situation möchte der Fahrer nun das aktuell laufende Telefongespräch mit einer Geste beenden. Zunächst ist, wie in Figur 3a) dargestellt, keine Berührung bzw. kein Berührungspunkt 46 auf der Bedienfläche 32 vorhanden. Die Funktion "Auflegen" ist der Geste "Hin-und-Her" zugeordnet, wenn sie mit drei Berührungspunkten 46 absolviert wird.

Zum Auflegen berührt der Benutzer also mit drei Finger seiner Hand 44 die Bedienfläche 32 an einem beliebigen Ort (Figur 3b), wodurch der Funktionensatz "Telefon" ausgewählt wird. Anschließend bewegt der Benutzer seine drei Finger auf der Bedienfläche 32 kurzzeitig nach rechts und danach in die entgegengesetzte Richtung wieder nach links relativ zur Hand 44.

Die Steuereinheit 34 erkennt die Geste "Hin-und-Her" und führt die entsprechende, der Geste zugeordnete Funktion aus. Dies ist in diesem Falle das Beenden des Telefongesprächs, wie es vom Benutzer gewünscht ist.

Währenddessen erhält der Benutzer eine optische Rückmeldung über den Ausgabebildschirm 36.

In der Situation gemäß den Figuren 4a) bis 4c) werden die Gesten zur Navigation in einem Menü, das im Ausgabebildschirm 36 angezeigt wird, verwendet.

In der in Figur 4a) gezeigten Situation befindet sich der Benutzer in einem Menü, mit dem er verschiedene Fahrzeugkomponenten anwählen kann. Die Fahrzeugkomponenten werden durch verschiedene Symbole 56 dargestellt, wobei das Symbol "Hauptmenü" in der Situation von Figur 4a) durch einen Cursor markiert ist.

Der Benutzer möchte nun zum Menü "Telefonie", wobei die Bewegung des Cursors durch Gesten mit einem Finger erreicht wird.

Der Benutzer legt also einen Finger auf die Bedienfläche 32 und bewegt diesen Finger auf der Bedienfläche 32 nach rechts.

Der Benutzer führt somit die Geste "Wischen nach rechts" mit einem Finger aus. Der entsprechende Berührungspunkt 46 absolviert dadurch die entsprechende Geste. Dieser Geste ist die Funktion zugeordnet, dass der Cursor zur Auswahl eines Menüpunktes nach rechts bewegt wird.

Die Steuereinheit 34 führt also diese Funktion aus und der Cursor liegt schließlich, wie in Figur 4b gezeigt, auf dem Symbol 56 für die Klimaanlage.

Daraufhin bewegt der Benutzer seinen Finger nach unten, sodass auch der Berührungspunkt 46 nach unten bewegt wird.

Der Berührungspunkt 46 absolviert somit eine weitere Geste, nämlich ein "Wischen nach unten". Dieser Geste ist eine Bewegung des Cursors nach unten zugeordnet.

Dementsprechend bewegt die Steuereinheit 34 den Cursor nach unten auf das Symbol für die Fahrzeugkomponente "Telefon".

Der Benutzer möchte nun diese von ihm gewünschte Fahrzeugkomponente auswählen und hebt hierzu seinen Finger kurzzeitig von der Bedienfläche 32 ab und setzt diesen an der gleichen Stelle wieder auf.

Der Berührungspunkt 46 absolviert dadurch die Geste "Tippen", die der Funktion "Auswählen" zugeordnet ist. Die Steuereinheit 34 wählt daher die Fahrzeugkomponente "Telefonie" aus.

Die Funktion "Auswählen" kann alternativ oder zusätzlich auch anderen Gesten zugeordnet sein, beispielsweise einer Geste, bei der lange an einer Stelle verweilt wird, wie der Geste "Tippen-und-Halten".

Die in den Figuren 2 bis 4 gezeigten Situationen sind nicht als getrennte Ausführungsformen zu verstehen, sondern stellen lediglich verschiedene Situationen während der Benutzung der Mensch-Maschinen-Schnittstelle 30 dar. Diese Situationen und Funktionen sind jedoch lediglich beispielhaft zu verstehen.

Beispielsweise kann der Benutzer während der in Figur 4 gezeigten Navigation mit der in Figur 2 gezeigten Geste "Ziehen" unter Verwendung von zwei Fingern die Zieltemperatur der Klimaanlage einstellen und anschließend seine Navigation wie in Figur 4 gezeigt weiter fortsetzen. Die Gesten stellen also Schnellzugriffe auf die Funktionen dar.

## Patentansprüche

1. Verfahren zum Betreiben einer Mensch-Maschinen-Schnittstelle (30) für ein Fahrzeug mit einer Steuereinheit (34) und wenigstens einer Bedienfläche (32), die als berührungsempfindliche Oberfläche ausgeführt ist, mit den folgenden Schritten:
a) eine Berührung an wenigstens einem beliebigen Berührungspunkt (46) der wenigstens einen Bedienfläche (32) wird erkannt,
b) die Anzahl an Berührungspunkten (46) auf der wenigstens einen Bedienfläche (32) wird erkannt,
c) eine Geste, die der wenigstens eine Berührungspunkt (46) absolviert, wird erkannt, und
d) eine Funktion wird in Abhängigkeit von der erkannten Geste und der erkannten Anzahl an Berührungspunkten (46) von der Steuereinheit (34) ausgeführt.

2. Verfahren nach Anspruch 1, **dadurch gekennzeichnet, dass** die Steuereinheit (34) ermittelt, ob und wie viele des wenigstens einen Berührungspunktes (46) einer Berührung mit einem Finger entspricht, wobei nur solche Berührungspunkte (46) berücksichtigt werden, die einer Berührung mit einem Finger entsprechen.

3. Verfahren nach Anspruch 1 oder 2, **dadurch gekennzeichnet, dass** eine Berührung an mehreren beliebigen Berührungspunkten (46) der wenigstens einen Bedienfläche (32) erkannt wird, wobei die Geste mit allen der Berührungspunkte (46) absolviert wird, und die absolvierte Geste berücksichtigt wird, wenn sie mit allen Berührungspunkten (46) absolviert wurde.

4. Verfahren nach einem der vorhergehenden Ansprüche, **dadurch gekennzeichnet, dass** die Steuereinheit (34) dazu eingerichtet ist, verschiedene Gesten zu erkennen, wobei verschiedenen Gesten verschiedene Funktionen zugeordnet sind.

5. Verfahren nach einem der vorhergehenden Ansprüche, **dadurch gekennzeichnet, dass** die Funktionen, die den verschiedenen Gesten zugeordnet werden, einen Funktionensatz darstellen, wobei der verwendete Funktionensatz in Abhängigkeit der erkannten Anzahl der Berührungspunkte (46) auf der wenigstens einen Bedienfläche (32) und/oder der erkannten Anzahl der Berührungspunkte (46), die zusammen die Geste absolvieren, ausgewählt wird.

6. Verfahren nach einem der vorhergehenden Ansprüche, **dadurch gekennzeichnet, dass** erkannt wird, mit welchem Finger oder welchen Fingern die Bedienfläche (32) bedient wird, wobei die Funktion und/oder der Funktionensatz in Abhängigkeit des verwendeten Fingers oder der verwendeten Finger ausgewählt wird.

7. Verfahren nach einem der vorhergehenden Ansprüche, **dadurch gekennzeichnet, dass** die Hand (44) erkannt wird, mit der die Bedienfläche (32) bedient wird, wobei die Funktion und/oder der Funktionensatz in Abhängigkeit der verwendeten Hand (44) ausgewählt wird.

8. Verfahren nach einem der vorhergehenden Ansprüche, **dadurch gekennzeichnet, dass** eine Geste durch eine Bewegung des wenigstens einen Berührungspunktes (46) in eine vorbestimmte Richtung absolviert wird und/oder dass eine Geste durch eine Bewegung des wenigstens einen Berührungspunktes (46) in eine erste vorbestimmte Richtung und anschließend in eine zweite vorbestimmte Richtung absolviert wird.

9. Verfahren nach Anspruch 8, **dadurch gekennzeichnet, dass** die vorbestimmte Richtung relativ zur Bedienfläche (32) vorbestimmt ist und/oder dass die Steuereinheit (34) die Lage der Hand (44) eines Benutzers anhand der Position der Berührungspunkte (46) zueinander ermittelt, und die vorbestimmte Richtung relativ zur Lage der Hand (44) vorbestimmt ist.

10. Verfahren nach einem der vorhergehenden Ansprüche, **dadurch gekennzeichnet, dass** eine Geste dadurch absolviert wird, dass der Berührungspunkt (46) kurzzeitig entfernt und an der im Wesentlichen selben Stelle wieder aufgesetzt wird.

11. Verfahren nach einem der vorhergehenden Ansprüche, **dadurch gekennzeichnet, dass** die Funktion und/oder der Funktionensatz auf einem Ausgabebildschirm (36) räumlich getrennt von der Bedienfläche (32) dargestellt wird.

12. Mensch-Maschinen-Schnittstelle für ein Fahrzeug mit wenigstens einer Bedienfläche (32), die als berührungsempfindliche Oberfläche ausgeführt ist, und einer Steuereinheit (34), die dazu eingerichtet ist, das Verfahren gemäß einem der vorhergehenden Ansprüche durchzuführen, wobei die wenigstens eine Bedienfläche (32) mit der Steuereinheit (34) zur Datenübertragung verbunden ist.

13. Mensch-Maschinen-Schnittstelle nach Anspruch 12, **dadurch gekennzeichnet, dass** die Mensch-Maschinen-Schnittstelle einen Ausgabebildschirm (36) aufweist, der räumlich getrennt von der Bedienfläche (32) und/oder einem Fahrzeugbauteil, an dem die Bedienfläche (32) vorgesehen ist, angeordnet ist, wobei die Funktion, die in Abhängigkeit von der erkannten Geste und der erkannten Anzahl an Berührungspunkten (46) von der Steuereinheit (34) ausgeführt wird, die verfügbaren Gesten und/oder der Funktionssatz auf dem Ausgabebildschirm (36) dargestellt ist.

14. Mensch-Maschinen-Schnittstelle nach Anspruch 12 oder 13, **dadurch gekennzeichnet, dass** die Mensch-Maschinen-Schnittstelle wenigstens ein Fahrzeugbauteil (10, 12, 14, 16, 18, 20, 22, 24, 26, 28) aufweist, wobei die Bedienfläche (32) an dem wenigstens einen Fahrzeugbauteil (10, 12, 14, 16, 18, 20, 22, 24, 26, 28) angeordnet ist, insbesondere wobei mehrere Fahrzeugbauteile (10, 12, 14, 16, 18, 20, 22, 24, 26, 28) vorgesehen sind, wobei mehrere Bedienflächen (32) an verschiedenen Fahrzeugbauteilen (10, 12, 14, 16, 18, 20, 22, 24, 26, 28) angeordnet sind.

15. Mensch-Maschinen-Schnittstelle nach Anspruch 14, **dadurch gekennzeichnet, dass** das Fahrzeugbauteil (10) ein Lenkrad (12), ein Sitz (14, 16), ein Steuerknüppel (28), eine Türblende (18), eine Armlehne (20), ein Teil einer Mittelkonsole (24), ein Teil eines Armaturenbretts (22) und/oder ein Teil einer Überkopfverkleidung (26) ist.
